(19) Europäisches Patentamt
European Patent Office
Office européen des brevets

(11) Veröffentlichungsnummer: **0 543 250 A1**

# (12) EUROPÄISCHE PATENTANMELDUNG

(21) Anmeldenummer: **92119146.6**

(22) Anmeldetag: **09.11.92**

(51) Int. Cl.5: **C08G 18/65**, C08K 5/16, C08K 5/31, C09J 175/04

(30) Priorität: **21.11.91 DE 4138246**

(43) Veröffentlichungstag der Anmeldung: **26.05.93 Patentblatt 93/21**

(84) Benannte Vertragsstaaten: **BE DE ES FR GB IT NL SE**

(71) Anmelder: **BAYER AG**

**W-5090 Leverkusen 1 Bayerwerk(DE)**

(72) Erfinder: **Trinks, Rainer, Dr.**
**Im Daubenthal 3**
**W-4047 Dormagen(DE)**
Erfinder: **Ganster, Otto, Dr.**
**Droste-Hülshoff-Strasse 5**
**W-5068 Odenthal(DE)**
Erfinder: **Königshofen, Heinrich, Dr.**
**Am Mühlenberg 25**
**W-5060 Bergisch Gladbach(DE)**

## (54) Zweikomponenten-Polyurethan-Reaktivmassen.

(57) Zweikomponenten-Polyurethan-Reaktivmassen, enthaltend gegen Entmischung stabilisierte, aktiven Wasserstoff enthaltende Komponenten und Polyisocyanate.

EP 0 543 250 A1

Die Erfindung betrifft verträgliche, lagerstabile Mischungen enthaltend höhermolekulare Polyhydroxylverbindungen und kurzkettige Polyole und deren Verwendung zur Herstellung von Polyurethanen. Die Erfindung betrifft auch die Verwendung dieser lagerstabilen Mischungen in Zweikomponenten-Polyurethanklebstoffen.

Es ist aus der DE-B-1 770 703 bekannt, zur Herstellung von Polyurethanen Gemische von miteinander unverträglichen Polyolen einzusetzen. Auf diese Weise sind Endprodukte mit verbessertem Eigenschaftsniveau wie beispielsweise guter Wärmebeständigkeit und hoher Schlagzähigkeit zugänglich.

Die Verwendung einer Mischung unverträglicher Polyole hat jedoch eine Reihe Lager- und verarbeitungstechnischer Nachteile. Bereits eine kurzfristige Lagerhaltung, d.h. einige Stunden bis 3 Tage, derartiger gut durchgemischter Polyolsysteme führt zur Auftrennung des Gemisches in 2 Phasen, so daß vor jedem Abfüllen die Polyolmischungen wieder sehr intensiv durchmischt werden bzw. ständig gemischt oder im Kreislauf gefahren werden müssen, um zu gewährleisten, daß das Mischungsverhältnis der Komponenten erhalten bleibt.

Es sind verschiedene Wege bekannt geworden, solche Mischungen phasenstabil einzustellen.

Das Absetzen der Phasen kann z.B. gemäß der Lehre der US-PS 3 945 939 durch den Zusatz von kolloidaler Kieselsäure oder eines mit einer Oniumverbindung modifizierten Tons erfolgen. Ähnlich lehrt die DE-A 2 341 294 die Mitverwendung von inerten, oberflächenaktiven Materialien, die eine spez. Oberfläche von 10 - 800 $m^2/g$ aufweisen, wie Kieselsäureagglomerat und/oder ein Cyrysotil-Asbest und/oder ein in seinem mineralischen Aufbau Crysotil-Asbest entsprechendes anorganisches Material.

Eine andere Möglichkeit, mehrere miteinander unverträgliche Polyole zu homogenisieren, besteht in der Mitverwendung von flüssigen oder löslichen Lösungsvermittlern. So werden gemäß US-PS 4 141 952 Gemische aus monomeren Polyolen mit einer Molmasse < 500 und Polyetherpolyolen mit einer Molmasse von 1800-7000 dadurch vor der Separation bewährt, daß sogenannte Pfropfpolypropylenetherglykole der Molmasse 1500-3500 mitverwendet werden.

Eine stabile Emulsion aus einem hochmolekularen Polyol und Ethylenglykol oder Butandiol-1,4 wird gemäß US-PS 4 273 884 dadurch hergestellt, daß ein Ethylenoxid/Propylenoxid-Copolymer (Molmasse 12000) mitverwendet wird.

In der DE-B 2 759 398 werden Mischungen aus Poly(oxypropylen/oxyethylen)-polyolen (OH-Zahl 20-60) mit bestimmten Oxyethylengehalten und Ethylenglykol oder Butandiol beschrieben. Die verwendeten Polyole weisen dabei zwingend einen Oxyethylenendabschluß von 10 bis 30 Gew.-% und einen inneren Oxyethylengehalt von 5 bis 60 Gew.-% auf. Dabei ist es bevorzugt, daß die Polyole möglichst viel Ethylenoxid im Inneren einverleibt enthalten.

In US-B 471 405 werden Gemische aus hochmolekularen Polyoxyalkylenpolyolen, die OH-Äquivalentgewichte von 650-3000 aufweisen, und z.B. Ethylenglykol dadurch vor der Entmischung bewahrt, daß lösliche Diolverbindungen wie 1,2-Butylenglykol, Di-(1,2-butylenglykol), Di-(1,2-propylenglykol) und Tri-(1,2-propylenglykol) mitverwendet werden.

Weiterhin ist es dem Fachmann bekannt, daß zweiphasige Gemische aus miteinander unverträglichen Polyolen auch durch Zugabe von Emulgatoren wie z.B. langkettiger Benzolalkylsulfonate etc. einphasig stabilisiert werden können.

Alle diese Lehren gemäß des Standes der Technik können nicht voll befriedigen. So kann die Verwendung von Feststoffen als Emulsionsstabilisatoren die Abrasion von Dosier- und Mischeinrichtungen bewirken, auch läßt die Stabilisierungswirkung im allgemeinen nach einigen Tagen schon stark nach. Außerdem werden gegen asbestöse Materialien physiologische Bedenken ins Feld geführt. Zu berücksichtigen ist bei der Verwendung solcher oberflächenaktiven Substanzen deren katalytische Eigenaktivität insbesondere bei Beladung mit Onium-Verbindungen.

Die Mitverwendung von sog. "Pfropfpolyolen", wie sie die US-PS 4 141 852 vorschlägt, hat den Nachteil, daß solche "Pfropfpolyole" teuer sind und so die Wirtschaftlichkeit des Verfahrens beeinträchtigen.

Die Lehre der US-PS 4 273 884 vermag ebenfalls nicht die Wünsche nach einem einphasig lagerstabilen Polyolgemisch zu befriedigen. Die herstellbaren Emulsionen zeigen nämlich schon zumindest teilweise innerhalb der ersten 6-8 Wochen eine Separation der Phasen. Die obige Patentschrift beschreibt im übrigen, daß "ziemlich stabile" Emulsionen erhalten werden.

Die Mitverwendung von Di- und Tripropylenglykol vermag zwar, wie in US-B 471 405 gelehrt wird, solche einphasig stabilen Polyolmischungen zu erzeugen, doch ist es jedem Fachmann bekannt, daß die Mitverwendung dieser Verbindungen zu einem scharfen Abfall der mechanischen Werte daraus hergestellter Polyurethankunststoffteile führt; insbesondere leidet die Wärmeformbeständigkeit.

Die Verwendung üblicher Emulgatoren zur Einphaseneinstellung leidet an einer Reihe von Nachteilen. Die Emulgatoren können mit der Zeit aus der Polyolmischung kristallin ausfallen oder sich z.B. an der

Oberfläche anreichern, sie können die katalytische Systembalance in unkontrollierbarer Weise verändern, sie können aus dem fertigen Polyurethan ausschwitzen und damit dessen Gebrauchseigenschaften drastisch mindern.

Es besteht also weiterhin ein dringendes technisches Interesse an für einen genügend langen Zeitraum lagerstabilen Polyol- bzw. Polyol-Polyamin-Formulierungen, die eine hohe Misch-Hydroxyl-, gegebenenfalls Hydroxyl-/Amin-Zahl haben und gegebenenfalls einen hohen Anteil an bevorzugt niedermolekularen Kettenverlängerern aufweisen.

Die DE-A 3 219 759 vermittelt die Lehre, die Verträglichkeit von (i) höhermolekularen Polyoxyalkylen-polyolen des OH-Zahlbereichs 20 - 210, die mindestens 5 Gew.-% überwiegend endständiger Oxyethylensegmente aufweisen mit (ii) Ethylenglykol dadurch herzustellen, daß man das Ethylenglykol mit 0,1 bis 0,5 Mol Propylenoxid pro Mol Ethylenglykol modifiziert.

Die DE-A 3 219 822 (= EP-A-0 095 635) vermittelt die Lehre, daß die verträglichkeitsmachende Wirkung der Propoxylierung des Ethylenglykols (und/oder des ebenfalls als niedermolekulares Diol in Betracht gezogenen 1,4-Butandiols) noch verstärkt werden kann, wenn man den Gemischen bestimmte Ammonium- oder Metallsalze der auch erfindungsgemäß einzusetztenden Art einverleibt.

EP-0 150 427 beschreibt die Verwendung von Kaliumsalzen als Verträglichkeitsvermittler. Unter anderen wird auch das Additionsprodukt von Kaliumhydrogensulfit an 2-cis-Butendiol-1,4 mit anschließender Umsetzung mit Propylenoxid als Lösungsvermittler vorgeschlagen.

US 4 786 435 beschreibt die Verwendung von Phenolen als Verträglichkeitsvermittler für RIM-Systeme.

US 4 839 087 lehrt die Verwendung von Urethanen als Verträglichkeitsvermittler für RIM-Systeme. US 4 673 696 beschreibt die Verwendung von ungesättigten Esterolen wie z.B. Fumarsäure oder Maleinsäureestern als Verträglichkeitsvermittler. Deren Verwendung in RIM-Systemen wird gelehrt. Die EP-A 0 341 375 beschreibt die Verwendung von Gemischen von Polyoxypropylentriolen in lagerstabilen RIM-Systemen. Die Mischungen können frei von Polyoxyethylen-Anteilen im Polyether sein.

US 4 385 133 beschreibt verträgliche Mischungen von Glycolen und Propylenoxid-Ethylenoxid-Polyolen, wobei ein hoher Mindestanteil von Ethylenoxid-Gruppen notwendig ist. Die Mischungen können in RIM-Systemen eingesetzt werden. US 4 319 973 beschreibt Polyurethan-Elastomere, die unter Verwendung lagerstabiler Mischungen bestimmter Polymer-Polyole mit Glycolen hergestellt werden. Die Anwendbarkeit ist auf bestimmte Ethylenoxid-Anteile und bestimmte Zusammensetzung der Polymer-Polyole beschränkt.

US 4 576 731 beschreibt Mischungen von Polyolen, die durch Umsetzung mit Isocyanaten eine verbesserte Verträglichkeit aufweisen.

Zweikomponenten-Polyurethanklebstoffe sind seit langem bekannt. So werden in den US-A-3 274 160 die Reaktionsprodukte von Polyisocyanaten mit einem Gemisch beschrieben, welches alkoholische Hydroxylfunktionen besitzt. Die US-A-3 591 561 und 3 725 355 beschreiben die Herstellung von Polyurethanelastomeren. Im ersten Fall werden ein Lactonpolyesterpolyol und ein niedermolekulares Diol mit einem organischen Diisocyanat umgesetzt und mittels Diamin oder Polyol wie z.B. Glycerin vernetzt. Im zweiten Fall wird das Polyurethanelastomer aus einem Polyetherpolyol, einem Kettenverlängerer und einem Isocyanatprepolymeren unter Verwendung eines Zinnkatalysators gewonnen. US-A-3 577 295 beschreibt Polyurethanelastomere für Treibriemen unter Verwendung von Polyolgemischen, welche Polymerisate ungesättigter Monomerer enthalten, organischen Polyisocyanaten und Aminen als Härtungsmittel. In US-A-4 182 898 sind Polyurethane beschrieben aus Polyesterpolyol-Prepolymeren, die im Gemisch mit niedermolekularen Polyolen mit Diisocyanaten umgesetzt werden. US-A-4 193 832 beschreibt die Reaktion von Polyisocyanaten mit isocyanatreaktivem Wasserstoff, bei der tertiäre Amine als Katalysatoren fungieren können. Ein Herstellungsverfahren für Polyurethanklebstoffe unter Verwendung überschüssigen Diisocyanates, Polyolen und gegebenenfalls Kettenverlängerern wie z.B. Aminen wird in US-A-4 156 064 beschrieben. Speziell die Verwendung von Aminen zur Bewirkung des "non-sagging"-Charakters von Klebstoffen wird beschrieben in US-A-3 979 364, 4 336 298 und 4 444 976 sowie EP-A-63 534.

US-A-4.487.909 beschreibt einen Klebstoff auf der Basis eines Polyols, z.B. eines Polyetherpolyols und Glycerin als Verzweiger. In US-A-4 530 941 wird eine RIM-Polyurethanmischung beschrieben, die sich zusammensetzt aus einem hochmolekularen Polyol, einem Kettenverlängerer, einem mit Aminendgruppen versehenen Polyoxyalkylen und einem Polyisocyanat. US-A-4 554 340 beschreibt die Polyolmischung zur Herstellung von Polyurethanen aus hochmolekularem Polyalkylenoxid und niedermolekularem Diol, gegebenenfalls auch isocyanatreaktiven Verbindungen wie Glycerin und Diamin. US-A-4 568 717 beschreibt die Herstellung von Polyolen aus organischen Polyisocyanaten mit einem Terephthalsäurepolyesterpolyol. US-A-3 714 127 beschreibt Zweikomponenten-Polyurethanklebstoffe auf Basis eines Isocyanatprepolymeren, dem zum Zwecke der Viskositätserhöhung und zur Gewährleistung von non-sagging Verhalten ein Amin zugesetzt wird.

EP-A-0 068 209 beschreibt einen Zweikomponenten-Polyurethanklebstoff mit einer Polyolkomponente, welche ein Polyester- oder Polyethertriol, ein Phenylendiamin und einen Zinnkatalysator enthält. Diese Mischung wird mit einem aromatischen Diisocyanat zur Reaktion gebracht.

EP-A-248 254 beschreibt einen Zweikomponenten-Polyurethanklebstoff, der das Reaktionsprodukt ist aus einem hydroxylfunktionellen Material, einem Di- oder Triamin und einem organischen Isocyanat. Die so hergestellten Klebstoffe zeichnen sich durch hervorragende Eigenschaften aus, jedoch befriedigen sie noch nicht alle Ansprüche hinsichtlich der Lagerstabilität der Polyolkomponente.

Die Verwendung von Dicyandiamid (= Dicy, Cyanoguanidin) oder Stickstoffheterocyclen als Härter für Epoxidharze ist bekannt, vgl. z.B. A. R. Meath "Epoxy Resins" in "Handbook of Adhesives", dritte Aufl., Hrsg. I. Skeist.

In Verbindung mit der Herstellung von Polyurethanen wird die Verwendung von Dicy als Flammschutzmittel in der EP-A-0 358 427 beansprucht. Das Dicy soll dabei als dispers verteilter Feststoff im Polyether vorliegen.

Aus diesen Anwendungen von Dicy und Verbindungen ähnlicher Struktur gemäß dem Stand der Technik kann nicht auf deren löslichkeitsvermittelnde Eigenschaften auf Gemische von niedermolekularen Polyalkoholen mit höhermolekularen Polyolen geschlossen werden. Angesichts der Schwerlöslichkeit von Dicy in höhermolekularen Polyetherpolyolen und Polyepoxiden muß diese Beobachtung sogar als ausgesprochen überraschend angesehen werden.

Der Erfindung lag daher die Aufgabe zugrunde, gegen Entmischung stabilisierte, aktiven Wasserstoff enthaltende Komponenten bereitzustellen, die nach Abmischung mit Polyisocyanaten leistungsfähige Zweikomponenten-Polyurethan-Reaktivmassen darstellen. Es war weiterhin eine Aufgabe, leistungsfähige Zweikomponenten-Polyurethan-Reaktionsklebstoffe bereitzustellen.

Die EP-A 0 471 474 betrifft die Verwendung von bestimmten Amidinen als Verträglichmacher für unverträgliche Polyhydroxylverbindungen. Die Verwendung der in dieser Schrift empfohlenen Verbindungen ist jedoch nicht Gegenstand der vorliegenden Erfindung.

Gegenstand der Erfindung ist eine

Zweikomponenten-Polyurethan-Reaktivmasse, enthaltend eine Isocyanatkomponente a), eine gegen Entmischung stabilisierte, aktiven Wasserstoff enthaltende Komponente b) sowie gegebenenfalls Katalysatoren für die Umsetzung von a) mit b) und gegebenenfalls weiteren Hilfs- und Zusatzstoffen, dadurch gekennzeichnet, daß die aktiven Wasserstoff enthaltende Komponente b) wenigstens eine gegen Entmischung stabilisierende Verbindung gelöst enthält, die ausgewählt ist aus der Gruppe bestehend aus Dicyandiamind, Guanidin, mindestens eine N-H-Bindung aufweisenden Guanidin-Derivaten und Verbindungen, die wenigstens eine N-H-Gruppe oder $NH_2$-Gruppe und wenigstens eine C-N-Mehrfachbindung oder N-N-Mehrfachbindung aufweisen und in denen das N-Atom der C-N-Gruppe oder ein N-Atom der N-N-Gruppe unmittelbar mit dem N-Atom der N-H-Gruppe oder $NH_2$-Gruppe verbunden ist.

In einer besonderen Ausführungsform sind in der Komponente b) enthalten;

b1) 100 Gew.-Tl. wenigstens einer hydroxylgruppenhaltigen Verbindung mit einem Molekulargewicht von mindestens 400 und einer Hydroxyfunktionalität von mindestens 2

b2) 5 - 35 Gew.-Tl. wenigstens eines hydroxylgruppenhaltigen, niedermolekularen Kettenverlängerers mit einem Molekulargewicht von mindestens 62 und einer Funktionalität von mindestens 2

b3) 0,5 - 10 Gew.-Tl. wenigstens einer gegen die Entmischung von b1) und b2) stabilisierend wirkende gelöste Verbindung der vorstehend genannten Art

b4) 0 - 20 Gew.-Tl. wenigstens eines aliphatischen, aromatischen, oder cycloaliphatischen Diamins oder Triamins mit einem Molekulargewicht von mindestens 60.

Erfindungsgemäß können auch Mischungen stabilisierend wirkender Verbindungen eingesetzt werden.

Die erfindungsgemäßen Reaktivmassen können formgebend oder nichtformgebend zur Herstellung von Polyurethanen eingesetzt werden. Gegebenenfalls können die Polyurethane auch geschäumt sein.

In einer bevorzugten Ausführungsform sind in den Teilkomponenten a) und b) weiter übliche Hilfs- und Zusatzstoffe enthalten.

Als Isocyanatkomponenten kommen vor allen Dingen Verbindungen der folgenden Formel in Frage;

$Q\,(NCO)_n$,

in der

n = 2-4, vorzugsweise 2, und

Q einen aliphatischen Kohlenwasserstoffrest mit 2-18, vorzugsweise 6-10 C-Atomen,

einen cycloaliphatischen Kohlenwasserstoffrest mit 4 – 15, vorzugsweise 5 – 10 C – Atomen,
einen aromatischen Kohlenwasserstoffrest mit 6 – 15, vorzugsweise 6 – 13 C – Atomen,
oder einen araliphatischen Kohlenwasserstoffrest mit 8 – 15, vorzugsweise 8 – 13 C – Atomen bedeuten.

Besonders bevorzugte Polyisocyanate sind Hexamethylendiisocyanat, 1,12 – Dodecandiisocyanat, Cyclobutan – 1,3 – diisocyanat, Cyclohexan – 1,3 – und – 1,4 – diisocyanat sowie beliebige Gemische dieser Isomeren, 1 – Isocyanato – 3,3,5 – trimethyl – 5 – isocyanatomethylcyclohexan, Hexahydro – 1,3 – und/oder – 1,4 – phenylendiisocyanat, Perhydro – 2,4' – und/oder – 4,4' – diphenylmethan – diisocyanat, 1,3 – und 1,4 – Phenylendiisocyanat, 2,4 – und 2,6 – Toluylendiisocyanat sowie beliebige Gemische dieser Isomeren, Diphenylmethan – 2,4' – und/oder – 4,4' – diisocyanat, Naphthylen – 1,5 – diisocyanat, Triphenylmethan – 4,4',4'' – triisocyanat oder Polyphenyl – polymethylenpolyisocyanate, wie sie durch Anilin – Formaldehyd – Kondensation und anschließende Phosgenierung erhalten werden.

Geeignete höhermolekulare Polyisocyanate sind Modifizierungsprodukte derartiger einfacher Polyiso – cyanate, d.h, Polyisocyanate mit z.B. Isocyanurat – , Carbodiimid – , Allophanat – , Biuret – oder Uretdion – Struktureinheiten, wie sie nach an sich bekannten Verfahren des Standes der Technik aus den beispielhaft genannten einfachen Polyisocyanaten der oben genannten allgemeinen Formel hergestellt werden können. Unter den höhermolekularen, modifizierten Polyisocyanaten sind insbesondere die aus der Polyurethan – chemie bekannten Prepolymeren mit endständigen Isocyanatgruppen des Molekulargewichtsbereichs 400 bis 10.000, vorzugsweise 600 bis 8.000 und insbesondere 800 bis 5.000 von Interesse. Diese Verbindungen werden in an sich bekannter Weise durch Umsetzung von überschüssigen Mengen an einfachen Polyiso – cyanaten der beispielhaft genannten Art mit organischen Verbindungen mit mindestens zwei gegenüber Isocyanatgruppen reaktionsfähigen Gruppen, insbesondere organischen Polyhydroxylverbindungen herge – stellt. Geeignete derartige Polyhydroxylverbindungen sind sowohl einfache mehrwertige Alkohole des Molekulargewichtsbereichs 62 bis 599, vorzugsweise 62 bis 200 wie z.B. Ethylenglykol, Trimethylolpropan, Propandiol – 1,2 oder Butandiol – 1,4, oder Butandiol – 2,3, insbesondere jedoch höhermolekulare Poly – etherpolyole und/oder Polyesterpolyole der aus der Polyurethanchemie an sich bekannten Art mit Moleku – largewichten von 600 bis 8.000, vorzugsweise 800 bis 4.000, die mindestens zwei, in der Regel 2 bis 8, vorzugsweise aber 2 bis 4 primäre und/oder sekundäre Hydroxylgruppen aufweisen. Selbstverständlich können auch solche NCO – Prepolymere eingesetzt werden, die beispielsweise aus niedermolekularen Polyisocyanaten der beispielhaft genannten Art und weniger bevorzugten Verbindungen mit gegenüber Isocyanatgruppen reaktionsfähigen Gruppen wie z.B. Polythioetherpolyolen, Hydroxylgruppen aufweisenden Polyacetalen, Polyhydroxypolycarbonaten, Hydroxylgruppen aufweisenden Polyesteramiden oder Hydrox – ylgruppen aufweisenden Copolymerisaten olefinisch ungesättigter Verbindungen erhalten worden sind. Zur Herstellung der NCO – Prepolymeren geeignete Verbindungen mit gegenüber Isocyanatgruppen reaktions – fähigen Gruppen, insbesondere Hydroxylgruppen, sind beispielsweise die in US – PS 4 218 543, Kolonne 7, Zeile 29 bis Kolonne 9, Zeile 25 beispielhaft offenbarten Verbindungen. Bei der Herstellung der NCO – Prepolymeren werden diese Verbindungen mit gegenüber Isocyanatgruppen reaktionsfähigen Gruppen mit einfachen Polyisocyanaten der oben beispielhaft genannten Art unter Einhaltung eines NCO/OH – Äquiva – lentverhältnisses von ca. 1,5:1 bis 20:1, vorzugsweise 5:1 bis 15:1 zur Umsetzung gebracht. Die NCO – Prepolymeren weisen im allgemeinen einen NCO – Gehalt von 2,5 bis 25, vorzugsweise 6 bis 22, Gew. – % auf. Hieraus geht bereits hervor, daß im Rahmen der vorliegen Erfindung unter "NCO – Prepolymeren" bzw. unter "Prepolymeren mit endständigen Isocyanatgruppen" sowohl die Umsetzungsprodukte als solche als auch ihre Gemische mit überschüssigen Mengen an nicht umgesetzten Ausgangspolyisocyanaten, die oft auch als "Semiprepolymere" bezeichnet werden, zu verstehen sind.

Für das erfindungsgemäße Verfahren besonders bevorzugte Polyisocyanatkomponenten a1) sind die in der Polyurethanchemie üblichen technischen Polyisocyanate, d.h. Hexamethylendiisocyanat, 1 – Isocyanato – 3,3,5 – trimethyl – 5 – isocyanatomethyl – cyclohexan (Isophorondiisocyanat, abgekürzt: IPDI), 4,4' – Diisocyanato – dicyclohexylmethan, 2,4 – Diisocyanatotoluol, dessen technische Gemische mit 2,6 – Diisocyanatotoluol, 4,4' – Diisocyanatodiphenylmethan, dessen Gemische mit den entsprechenden 2,4' – und 2,2' – Isomeren, Polyisocyanatgemische der Diphenylmethanreihe, wie sie durch Phosgenierung von Anilin/Formaldehyd – Kondensaten in an sich bekannter Weise gewonnen werden können, die Biuret – oder Isocyanuratgruppen aufweisenden Modifizierungsprodukte dieser technischen Polyisocyanate und insbe – sondere NCO – Prepolymere der genannten Art auf Basis dieser technischen Polyisocyanate einerseits und den beispielhaft genannten einfachen Polyolen und/oder Polyetherpolyolen und/oder Polyesterpolyolen andererseits, sowie beliebige Gemische derartiger Polyisocyanate.

Bei der Komponente b1) des erfindungsgemäßen Systems handelt es sich vorzugsweise um minde – stens eine organische Verbindung mit einem Molekulargewicht von 400 – 12.000, vorzugsweise 400 – 6.000, mit 2 – 8, vorzugsweise 2 – 5, Hydroxylfunktionen. Die hier angegebenen Molekulargewichte sind aus der OH – Zahl der Substanz über folgende Beziehung zu errechnen:

$$\text{Molekulargewicht} = \frac{56.000}{\text{OH-Zahl}} \times \text{Funktionalität}$$

Es können beispielsweise Polyhydroxypolyether der aus der Polyurethanchemie an sich bekannten Art verwendet werden, wie sie durch Alkoxylierung geeigneter Startermoleküle wie Ethylenglykol, Diethylenglykol, 1,4-Dihydroxybutan, 1,6-Dihydroxyhexan, Trimethylolpropan, Glycerin, Pentaerythrit, Sorbit oder Saccharose zugänglich sind. Als Starter können ebenfalls fungieren: Ammoniak oder Amine wie Ethylendiamin, Hexamethylendiamin, 2,4-Diaminotoluol, Anilin oder Aminoalkohole. Die Alkoxylierung erfolgt unter Verwendung von Propylenoxid und/oder Ethylenoxid in beliebiger Reihenfolge.

Ferner geeignet sind Polyesterpolyole, wie sie durch Umsetzung der beispielhaft genannten niedermolekularen Alkohole mit mehrwertigen Carbonsäuren wie Adipinsäure, Phthalsäure, Hexahydrophthalsäure, Tetrahydrophthalsäure oder den Anhydriden dieser Säuren in an sich bekannter Weise zugänglich sind.

Ebenfalls geeignet sind solche höhermolekularen Polyhydroxypolyether, in denen hochmolekulare Polyaddukte bzw. Polykondensate oder Polymerisate in feindisperser, gelöster oder aufgepfropfter Form vorliegen. Derartige modifizierte Polyhydroxylverbindungen werden z.B. erhalten, wenn man Polyadditionsreaktionen (z.B. Umsetzungen zwischen Polyisocyanaten und aminofunktianellen Verbindungen) bzw. Polykondensationsreaktionen (z.B. zwischen Formaldehyd und Phenolen und/oder Aminen) in situ in den Hydroxylgruppen aufweisenden Verbindungen ablaufen läßt. Derartige Verfahren sind beispielsweise in DE-AS 1 168 075 und 1 260 142, sowie DE-A-2 324 134, 2 423 984, 2 512 385, 2 513 815, 2 550 796, 2 550 797, 2 550 833, 2 550 862, 2 633 293 und 2 639 254 beschrieben. Es ist aber auch möglich gemäß US-A-3 869 413 bzw. DE-A-2 550 860 eine fertige wäßrige Polymerdispersion mit einer Polyhydroxylverbindung zu vermischen und anschließend aus dem Gemisch das Wasser zu entfernen.

Auch durch Vinylpolymerisate modifizierte Polyhydroxylverbindungen, wie sie z.B. durch Polymerisation von Styrol und Acrylnitril in Gegenwart von Polyethern (US-A-3 383 351, 3 304 273, 3 523 093, 3 110 695; DE-A-1 152 536) oder Polycarbonatpolyolen (DE-PS 1 769 795; US-A-3 637 909) erhalten werden, sind für das erfindungsgemäße Verfahren als Komponente b) geeignet. Bei Verwendung von Polyetherpolyolen, welche gemäß DE-A-2 442 101, 2 644 922 und 2 646 141 durch Pfropfpolymerisation mit Vinylphosphonsäureestern sowie gegebenenfalls (Meth)acrylnitril, (Meth)acrylamid oder OH-funktionellen (Meth)acrylsäureestern modifiziert wurden, erhält man Kunststoffe von besonderer Flammwidrigkeit.

Vertreter der genannten erfindungsgemäß als Verbindungen b1) zu verwendenden Verbindungen sind z.B. in High Polymers, Vol. XVI, "Polyurethanes, Chemistry and Technology", verfaßt von Saunders-Frisch, Interscience Publishers, New York, London, Band I, 1962, Seiten 32-42 und Seiten 44-54 und Band II, 1964, Seiten 5-6 und 198-199, sowie im Kunststoff-Handbuch, Band VII, Vieweg-Höchtlen, Carl-Hanser-Verlag, München, 1966, z.B. auf den Seiten 45-71, beschrieben.

Bevorzugte Polyole b2) sind niedermolekulare mehrwertige Alkohole mit einem Molekulargewichtsbereich von 62 -400, wie die bereits als Startermoleküle unter b1) erwähnten Substanzen wie Ethylenglykol, Diethylenglykol, 1,4-Dihydroxybutan, Butandiol-2,3, 1,6-Dihydroxyhexan, Trimethylolpropan, Glycerin, Pentaerythrit, Sorbit oder Saccharose. Besonders bevorzugt sind mehrwertige Alkohole mit einer Funktionalität von 2.

Bevorzugte Verbindungen b3), die gegen die Entmischung der aktiven Wasserstoff enthaltenden Komponenten wirksam sind enthalten wenigstens eine N-H-Gruppe oder $NH_2$-Gruppe und eine C-N-Mehrfachbindung oder eine N-N-Mehrfachbindung und das das N-Atom der C-N-Gruppe oder ein N-Atom der N-N-Gruppe ist unmittelbar mit dem N-Atom der N-H-Gruppe oder $NH_2$-Gruppe verbunden. Ebenfalls gut geeignet sind Dicyandiamid, Guanidin und beliebige Guanidin-Derivate, die mindestens eine N-H-Bindung aufweisen.

Typische solche Guanidin-Derivate sind Dicyandiamid, [2,2,2-Trichlor-acetimidoyl]-guanidin, Ethoxycarbimidoyl-guanidin, Biguanid, o-Tolylbiguanid, N-Cyan-N'-methoxymethyl-guanidin, N-Acetyl-N'-cyan-guanidin, N-Cyan-N'-propionyl-guanidin, N-Acryloyl-N'-cyan-guanidin, N-Cyan-N'-methoxycarbonyl-guanidin, N,N'-Dicyan-guanidin, Triguanid, N,N'-Dicyan-N-methoxycarbonyl-guanidin, 1-Methoxybiguanid, 2-Guanidinobenzimidazol, 2-Guanidino-5-nitrobenzimidazol, 2-Cyanaminobenzimidazol.

Von vielen der genannten Verbindungen sind Tautomere und/oder salzartige Komplexe bekannt, Diese Komplexe sind nicht bevorzugt. Vertreter der genannten erfindungsgemäß als Entmischungsstabilisatoren zu verwendenden Verbindungen sind in Beilsteins Handbuch der organischen Chemie Bd E IV 3, S. 148 bis 172 beschrieben, Bevorzugt ist Dicyandiamid.

Typische Vertreter solcher Verbindungen mit der Verknüpfung von N-Atom der C-N-Gruppe und N-Atom der N-H-oder $NH_2$-Gruppe sind Pyrazol, Derivate von 3-Methylpyrazol oder 1,2,4-Triazol, sowie Derivate wie 3-Methylpyrazol.

Besonders bevorzugt sind Pyrazol und 3,5-Dimethylpyrazol.

Typische Vertreter solcher Verbindungen mit der Verknüpfung von einem N-Atom der N-N-Gruppe und dem N-Atom der NH- oder $NH_2$-Gruppe sind Triazol und dessen Derivate wie Benzotriazol, 4-Methylbenzotriazol, 5-Methylbenzotriazol.

Besonders bevorzugt sind Benzotriazol, 4-Methylbenzotriazol, 5-Methylbenzotriazol sowie deren Isomerengemische (Tolyltriazol).

Die erfindungswesentlichen Verträglichkeitsvermittler sind vorzugsweise in der Komponente b) in einer Konzentration von 1 bis 10 Gew.-%, bezogen auf das Gesamtgewicht der Komponente b) gelöst.

Bevorzugte Amine b4) haben ein Molekulargewicht von 60 - 300. Besonders bevorzugt sind dabei Diamine wie 1,4-Diaminobenzol, 2,4-Diaminotoluol, 2,4'-und/oder 4,4'-Diaminodiphenylmethan oder vorzugsweise solche Diamine, die zumindest in jeweils einer ortho-Stellung zu den Aminogruppen einen Alkylsubstituenten aufweisen, insbesondere um solche, die in ortho-Stellung zu der ersten Aminogruppe mindestens einen Alkylsubstituenten und in ortho-Stellung zur zweiten Aminogruppe zwei Alkylsubstituenten mit jeweils 1 bis 3 Kohlenstoffatomen aufweisen, besonders bevorzugt sind solche, die in jeweils mindestens einer ortho-Stellung zu den Aminogruppen einen Ethyl-, n-Propyl- und/oder Isopropylsubstituenten und gegebenenfalls in weiteren ortho-Stellungen zu den Aminogruppen Methylsubstituenten aufweisen. Zu diesen bevorzugten bzw. besonders bevorzugten Diaminen gehören 2,4-Diaminomesitylen, 1,3,5-Triethyl-2,4-diaminobenzol, 1,3,5-Triisopropyl-2,4-diaminobenzol, 1-Methyl-3,5-diethyl-2,4-diaminobenzol, dessen technischen Gemische mit 1-Methyl-3,5-diethyl-2,6-diaminobenzol, 4,6-Dimethyl-2-ethyl-1,3-diaminobenzol, 3,5,3',5'-Tetraethyl-4,4'-di-aminodiphenylmethan, 3,5,3',5'-Tetraisopropyl-4,4'-diaminodiphenylmethan oder 3,5-Diethyl-3',5'-diisopropyl-4,4'-diaminodiphenylmethan. Beliebige Gemische derartiger aromatischer Diamine können ebenfalls eingesetzt werden.

Besonders bevorzugte aliphatische Diamine sind Isophorondiamin, Bis-(4-aminocyclohexyl)-methan, 1,4-Diaminocyclohexan, Ethylendiamin und seine Homologen und Piperazin.

Hilfs- und Zusatzmittel, die im allgemeinen der Komponente b) einverleibt werden, sind beispielsweise Treibmittel, Katalysatoren, Füllstoffe, Farbstoffe, Pigmente, Schaumstabilisatoren u.dgl. Bezüglich der Art der Mengen der Hilfe- und Zusatzmittel wird auf die einschlägige Fachliteratur verwiesen, beispielsweise auf J.H. Saunders und K.C. Frisch "High Polymers" Band XVI, Polyurethanes, Teil 2 und 7, Verlag Interscience Publishers 1962 bzw. 1964.

Gegenstand der vorliegenden Erfindung ist auch ein Verfahren zum Verkleben von Substanzen mit dem erfindungsgemäßen System. Das erfindungsgemäße System eignet sich insbesondere zum Verkleben von Kunststoffen, Metallen, Stein, Holz und Glas.

Die Anwendung des Zweikomponenten-Polyurethanklebstoffes erfolgt vorzugsweise durch kontinuierliches Mischen der beiden Komponenten a) und b) entweder in einem Rührermischer, in einem statischen Mischer oder in einem Gegenstrom-Mischer und sofortigen Auftrag des fertigen Klebstoffes als Raupe auf mindestens eines der zu verklebenden Substrate. Eine Vorbehandlung der Substratoberflächen im Sinne einer Reinigung, Aufrauhung oder einer sonstigen Vorbehandlung ist häufig nicht erforderlich. Die Mengenverhältnisse von Isocyanat- zu Polyolkomponenten folgen den allgemein in der Isocyanatchemie geltenden Prinzipien; es wird mit geringfügigem Isocyanatüberschuß gearbeitet (Kennzahlbereich: 100 - 125, bevorzugt: 100 - 115).

Die mit Klebstoff versehenen Substrate werden zusammengelegt, fixiert und entweder bei Raumtemperatur aushärten gelassen bzw. einem Härtungsprozeß bei erhöhter Temperatur unterworfen. Bei erhöhter Temperatur kann der Zustand der Handfestigkeit schneller erreicht werden als bei Raumtemperatur.

Die gewünschte offene Zeit bzw. Aushärtezeit kann durch die Wahl der Aushärtetemperatur und Wahl des Katalysators in weiten Grenzen variiert werden.

Ein weiterer Vorteil des erfindungsgemäßen Klebstoffs besteht darin, daß er lösungsmittelfrei verarbeitet werden kann.

## Beispiele

Katalysator:

Kat. 1 = tert. Aminkatalysator der Struktur

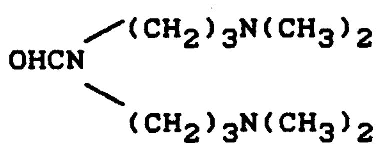

Kat. 2 = tert. Aminkatalysator Dabco 33 LV der Fa. Air-Products

Zeolith-Paste:

Eine 50 %ige Zeolith-Suspension in Ricinusöl
H12-MDA: Aliphatisches Diamin der Struktur

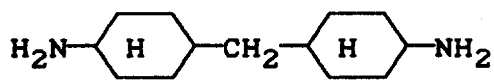

IPDA: Isophorondiamin
DC: Dicyandiamid (= Cyanoguanidin)
GB: 2-Guanidinobenzimidazol
PY: Pyrazol
DP: 3,5-Dimethylpyrazol
BT: Benzotriazol
TT: Tolyltriazol
Roh-MDI: 4,4'-Diisocyanatodiphenylmethan im Gemisch mit seinen Isomeren und höheren Homologen, wie sie durch Phosgenierung von Anilin-Formaldehyd-Kondensaten erhalten werden, NCO-Gehalt 30,4 %, Viskosität eta 25 : 80 mPas.

Kettenverlängerer:

Ethandiol-1,2 = EG
Propandiol-1,3 = PD
Butandiol-1,4 = 14BD
Butandiol-1,3 = 13BD

Polyole:

A = trifunktionelles Polyetherpolyol, 83 % Propylenoxid, 17 % Ethylenoxid-Endgruppen, [Mn] ca. 4800 g/Mol, OH-Zahl 35 mg KOH/g.

B = In Analogie zu Beispiel 1 der DE-A-263 759 wird ein Füllstoffpolyether hergestellt, wobei als "Lösungsmittel" 5077 Gew.-Teile eines Polyetherpolyols der OH-Zahl 35 mg KOH/g, hergestellt durch Propoxylierung von Trimethylolpropan und Ethoxylierung des Propoxylierungsprodukts (PO:EO-Verhältnis = 83:17), an Stelle der 670 Gew.-Teile Hydrazinhydrat lediglich 380 Gew.-Teile Hydrazinhydrat und an Stelle der 2310 Gew.-Teile Toluylendiisocyanat lediglich 1320 Gew.-Teile des Diisocyanates umgesetzt werden.

Es resultiert ein Polyether mit einem Gehalt an organischem Füllstoff von 20 Gew.-% und einer Hydroxyzahl von 28 mg KOH/g.

C = Es wird ein Füllstoffpolyether hergestellt, wobei als "Lösungsmittel" 780 Gew.-Tl. eines Polyetherpolyols der OH-Zahl 35 mg KOH/g, hergestellt durch Propoxylierung von Trimethylolpropan und Ethoxylierung des Propoxylierungsprodukts (PO:EO-Verhältnis = 83:17), eingesetzt werden.

Durch die radikalische in situ Polymerisation von 120 Gew.-Tl. eines Gemischs aus Acrylnitril und Styrol im Gewichtsverhältnis von 60 zu 40 im Polyether resultiert ein Polyether mit einem Gehalt an organischem Füllstoff von 20 Gew.-% und einer Hydroxylzahl von 28 mg KOH/g.

E = Trifunktionelles Polyetherpolyol, 83 % Propylenoxid, 17 % Ethylenoxid-Endgruppen, [Mn] ca. 6000 g/Mol, OH-Zahl 28 mg KOH/g.

Die folgenden Beispiele verdeutlichen die verbesserte Verträglichkeit von Polyolgemischen durch die Mitverwendung von Löslichkeitsvermittlern bei Raumtemperatur.

Beispiel

| | Diol | - Masse Tl. | Polyol | - Masse Tl. | VV | - Masse Tl. | Verträglichkeit |
|---|---|---|---|---|---|---|---|
| 1a | EG | 15 | A | 80 | DC | 3 | homogen |
| b | EG | 15 | A | 80 | GB | 8 | homogen |
| c | EG | 15 | A | 80 | PY | 6 | homogen |
| d | EG | 15 | A | 80 | DP | 6 | homogen |
| * | EG | 15 | A | 80 | - | - | inhomogen |
| * | EG | 10 | A | 80 | - | - | inhomogen |
| 2 | PD | 20 | A | 80 | DC | 3 | homogen |
| * | PD | 20 | A | 80 | - | - | inhomogen |
| 3 | 13BD | 25 | A | 80 | DC | 2 | homogen |
| * | 13BD | 25 | A | 80 | - | - | inhomogen |
| 4a | 14BD | 25 | A | 80 | PY | 6 | homogen |
| b | 14BD | 25 | A | 80 | TT | 10 | homogen |
| * | 14BD | 25 | A | 80 | - | - | inhomogen |
| 5 | EG | 15 | E | 80 | DC | 3 | homogen |
| * | EG | 15 | E | 80 | - | - | inhomogen |

* = Vergleichsbeispiele, nicht erfindungsgemäß
VV = Verträglichkeitsvermittler

Die erfindungsgemäßen homogenen Lösungen bleiben bei Raumtemperaturlagerung über Monate klar.

Die nachfolgenden Beispiele zeigen, daß die Verbesserung der Stabilisierung gegen Entmischung auch mit füllstoffhaltigen Polyolen erreicht wird. Zur besseren Beurteilung des Effekte wird im Diol vor der Abmischung mit den Polyolen ein Farbstoff aufgelöst.

Beispiel

| | Diol | - Masse Tl. | Polyol | - Masse Tl. | VV | - Masse Tl. | Verträglichkeit |
|---|---|---|---|---|---|---|---|
| 6a | EG | 15 | B | 100 | DC | 3 | homogen |
| b | EG | 15 | B | 100 | PY | 6 | homogen |
| c | 14BD | 25 | B | 100 | DP | 8 | homogen |
| * | EG | 15 | B | 100 | - | - | inhomogen |
| 7 | EG | 15 | C | 100 | DC | 3 | homogen |
| * | EG | 15 | C | 100 | - | - | inhomogen |
| * | EG | 10 | A | 80 | - | - | inhomogen |

* = Vergleichsbeispiele, nicht erfindungsgemäß

Die nachfolgenden Beispiele zeigen, daß durch die Variation des Anteils an Verträglichkeitsvermittler die Temperatur oberhalb der die Mischungen von kurzkettigem Polyol und langkettigem Polyol verträglich sind, gezielt beeinflußt werden kann.

Beispiel

| | Diol | - Masse Tl. | Polyol | - Masse Tl. | VV | - Masse Tl. | Verträglich oberhalb von [°C] |
|---|---|---|---|---|---|---|---|
| 8 | EG | 15 | A | 80 | DC | 3 | tiefer als -6 |
| 9 | EG | 15 | A | 80 | DC | 1,5 | ca. 100 |
| 10 | EG | 15 | A | 80 | GB | 6 | ca. 35 |
| * | EG | 15 | A | 80 | - | - | ca. 130 |
| * = Vergleichsbeispiele, nicht erfindungsgemäß | | | | | | | |

Die nachfolgenden Beispiele zeigen, daß sich unter Verwendung der erfindungsgemäßen Verträglichkeitsvermittler Polyolkomponenten formulieren lassen, die stabil gegen Entmischung sind und nach Abmischung mit einer Isocyanat-Komponente ein gutes Niveau der klebtechnischen Eigenschaften erreichen.

Für die Prüfung der Zugscherfestigkeiten nach DIN 53283 wurden einschnittig überlappte Verbindungen aus dem zu verklebenden Kunststoffmaterial hergestellt. Die Klebfugendicke betrug 0,8 mm, sofern nicht anders angegeben, die Probenbreite 20 mm, die Überlappungslänge 10 mm. Die Zugscherfestigkeit wird als Mittelwert von 5 Proben angegeben. Die Fügeteile werden keiner besonderen Vorbehandlung unterzogen.

Beispiel 11

Fügeteile: Ungesättigtes, glasfaserverstärktes Polyesterharz (SMC, grau), Stärke: 4 mm
Abbindebedingungen: 30 min bei 160°C (Laborumluftofen, Fügevorrichtung)
Polyolmischung: 98,0 Gew.-Tl. der Polyolmischung aus Beispiel 1a werden mit 6,0 Gew.-Tl. Zeolith-Paste, 10,0 Gew.-Tl. Aerosil R 202 der Fa. Degussa und 0,3 Gew.-Tl. Kat. 1 versetzt.
114,3 Gew.-Tl. der obigen Polyolmischung werden mit 94,0 Gew.-Tl. Roh-MDI abgemischt.
Die mittlere Zugscherfestigkeit bei Raumtemperatur betrug 7,1 N/mm$^2$. Das Bruchbild zeigte vollständiges Fügeteilversagen.

Beispiel 12

Fügeteile: Ungesättigtes, glasfaserverstärktes Polyesterharz (SMC, grau), Stärke: 4 mm
Abbindebedingungen: 30 min bei 160°C (Laborumluftofen, Fügevorrichtung)
Polyolmischung:
100,0 Gew.-Tl. Polyol C
10,0 Gew.-Tl. EG
2,0 Gew.-Tl. DC
2,5 Gew.-Tl. $H_{12}$-MDA
6,0 Gew.-Tl. Zeolith-Paste
0,2 Gew.-Tl. Kat. 1

120,7 Gew.-Tl. der obigen Polyolmischung werden mit 70,0 Gew.-Tl. Roh-MDI abgemischt.
Die mittlere Zugscherfestigkeit bei Raumtemperatur betrug 6,9 N/mm$^2$. Das Bruchbild zeigte vollständiges Fügeteilversagen.

Beispiel 13

Fügeteile: Ungesättigtes, glasfaserverstärktes Polyesterharz (SMC, grau), Stärke: 4 mm
Abbindebedingungen: 30 min bei 160°C (Laborumluftofen, Fügevorrichtung)
Polyolmischung:
80,0 Gew.-Tl. Polyol A
10,0 Gew.-Tl. EG
2,0 Gew.-Tl. DC
1,5 Gew.-Tl. IPDA
6,0 Gew.-Tl. Zeolith-Paste
0,1 Gew.-Tl. Kat. 2

99,6 Gew.-Tl. der obigen Polyolmischung werden mit 70,0 Gew.-Tl. Roh-MDI abgemischt.
Die mittlere Zugscherfestigkeit bei Raumtemperatur betrug 7,4 N/mm$^2$. Das Bruchbild zeigte vollständiges Fügeteilversagen.

Beispiel 14

Fügeteile: Stahlblech ST 1303 entfettet,
Stärke: 1 mm
Abbindebedingungen: 40 min bei 180 ° C (Laborumluftofen, Fügevorrichtung)

| | |
|---|---|
| Polyolmischung: | 100,0 Gew. – Tl. Polyol C |
| | 17,4 Gew. – Tl. EG |
| | 3,0 Gew. – Tl. DC |
| | 2,5 Gew. – Tl. $H_{12}$ – MDA |
| | 6,0 Gew. – Tl. Zeolith – Paste |
| | 0,1 Gew. – Tl. Kat. 1 |

129,0 Gew. – Tl. der obigen Polyolmischung werden mit 100,0 Gew. – Tl. Roh – MDI abgemischt.
Die mittlere Zugscherfestigkeit bei Raumtemperatur betrug mehr als 17,5 N/mm$^2$. Das Bruchbild zeigte einen Mischbruch zwischen Adhäsions – und Kohäsionsversagen.

Dieses Beispiel belegt, daß in Abhängigkeit von Substrat auch höhere Zugscherfestigkeiten erreicht werden können.

Fügeteile: Ein Polycarbonat – ABS – Blend mit 65 % Polycarbonatanteil
Abbindebedingungen: 24 h bei Raumtemperatur (Fügevorrichtung)

| | |
|---|---|
| Polyolmischung: | 100,0 Gew. – Tl. Polyol B |
| | 10,0 Gew. – Tl. EG |
| | 2,0 Gew. – Tl. DC |
| | 2,5 Gew. – Tl. $H_{12}$ – MDA |
| | 6,0 Gew. – Tl. Zeolith – Paste |
| | 0,2 Gew. – Tl. Kat. 1 |

120,7 Gew. – Tl. der obigen Polyolmischung werden mit 70,0 Gew. – Tl. Roh – MDI abgemischt.
Die mittlere Zugscherfestigkeit bei Raumtemperatur betrug 6,9 N/mm$^2$. Das Bruchbild zeigte vollständiges Fügeteilversagen.

Beispiel 16

Fügeteile: Ungesättigtes, glasfaserverstärktes Polyesterharz (SMC 109), Stärke: 4 mm
Abbindebedingungen: 30 min bei 160 ° C (Laborumluftofen, Fügevorrichtung)

| | |
|---|---|
| Polyolmischung: | 80,0 Gew. – Tl. Polyol A |
| | 12,0 Gew. – Tl. EG |
| | 2,5 Gew. – Tl. DC |
| | 2,0 Gew. – Tl. IPDA |
| | 6,0 Gew. – Tl. Zeolith – Paste |
| | 0,1 Gew. – Tl. Kat. 1 |

102,6 Gew. – Tl. der obigen Polyolmischung werden mit 70,0 Gew. – Tl. Roh – MDI abgemischt.
Die mittlere Zugscherfestigkeit bei – 40 ° C betrug 9,4 N/mm$^2$. Das Bruchbild zeigte vollständiges Fügeteil – versagen.

Beispiel 17

Fügeteile: Ungesättigtes, glasfaserverstärktes Polyesterharz (SMC), Stärke: 4 mm
Abbindebedingungen: 30 min bei 160 ° C (Laborumluftofen, Fügevorrichtung)
Polyolmischung: 98,0 Gew. – Tl. der Polyolmischung aus Beispiel 1c werden mit 2,5 Gew. – Tl. $H_{12}$ – MDA, 6,0 Gew. – Tl. Zeolith – Paste und 0,1 Gew. – Tl. Kat. 1 vermischt.
106,6 Gew. – Tl. der obigen Polyolmischung werden mit 94,0 Gew. – Tl. Roh – MDI abgemischt.
Die mittlere Zugscherfestigkeit bei Raumtemperatur betrug 4,2 N/mm$^2$. Das Bruchbild zeigte vollständiges Fügeteilversagen.

Beispiel 18

Fügeteile: Ungesättigtes, glasfaserverstärktes Polyesterharz (SMC), Stärke: 4 mm
Abbindebedingungen: 30 min bei 160 ° C (Laborumluftofen, Fügevorrichtung)
Polyolmischung: 101,0 Gew. – Tl. der Polyolmischung aus Beispiel 1e werden mit 2,5 Gew. – Tl. $H_{12}$ – MDA, 10,0 Gew. – Tl. Zeolith – Paste und 0,1 Gew. – Tl. Kat. 1 vermischt.

113,6 Gew.−Tl. der obigen Polyolmischung werden mit 94,0 Gew.−Tl. Roh−MDI abgemischt.
Die mittlere Zugscherfestigkeit bei Raumtemperatur betrug 6,3 N/mm$^2$. Das Bruchbild zeigte vollständiges Fügeteilversagen.

Beispiel 19

Fügeteile: Ungesättigtes, glasfaserverstärktes Polyesterharz (SMC), Stärke: 4 mm
Abbindebedingungen: 30 min bei 160°C (Laborumluftofen, Fügevorrichtung)

| | |
|---|---|
| Polyolmischung: | 100,0 Gew.−Tl. Polyol B |
| | 17,4 Gew.−Tl. EG |
| | 6,0 Gew.−Tl. DC |
| | 2,5 Gew.−Tl. $H_{12}$MDA |
| | 6,0 Gew.−Tl. Zeolith−Paste |
| | 0,1 Gew.−Tl. Kat. 1 |

132,0 Gew.−Tl. der obigen Polyolmischung werden mit 100,0 Gew.−Tl. Roh−MDI abgemischt.
Die mittlere Zugscherfestigkeit bei Raumtemperatur betrug 6,4 N/mm$^2$. Das Bruchbild zeigte vollständiges Fügeteilversagen.

Beispiel 20

Fügeteile: Ungesättigtes, glasfaserverstärktes Polyesterharz (SMC), Stärke: 4 mm
Abbindebedingungen: 30 min bei 160°C (Laborumluftofen, Fügevorrichtung)

| | |
|---|---|
| Polyolmischung: | 100,0 Gew.−Tl. Polyol B |
| | 25,0 Gew.−Tl. 14BD |
| | 8,0 Gew.−Tl. BT |
| | 2,5 Gew.−Tl. $H_{12}$−MDA |
| | 6,0 Gew.−Tl. Zeolith−Paste |
| | 0,1 Gew.−Tl. Kat. 1 |

141,6 Gew.−Tl. der obigen Polyolmischung werden mit 100,0 Gew.−Tl. Roh−MDI abgemischt.
Die mittlere Zugscherfestigkeit bei Raumtemperatur betrug 7,8 N/mm$^2$. Das Bruchbild zeigte vollständiges Fügeteilversagen.

Beispiel 21

Fügeteile: Ungesättigtes, glasfaserverstärktes Polyesterharz (SMC), Stärke: 4 mm
Abbindebedingungen: 30 min bei 160°C (Laborumluftofen, Fügevorrichtung)

| | |
|---|---|
| Polyolmischung: | 80,0 Gew.−Tl. Polyol A |
| | 25,0 Gew.−Tl. 14BD |
| | 8,0 Gew.−Tl. BT |
| | 2,5 Gew.−Tl. $H_{12}$−MDA |
| | 6,0 Gew.−Tl. Zeolith−Paste |
| | 0,1 Gew.−Tl. Kat. 1 |

121,6 Gew.−Tl. der obigen Polyolmischung werden mit 100,0 Gew.−Tl. Roh−MDI abgemischt.
Die mittlere Zugscherfestigkeit bei Raumtemperatur betrug 5,9 N/mm$^2$. Das Bruchbild zeigte vollständiges Fügeteilversagen.

Beispiel 22

Dieses Beispiel zeigt auf, daß eine typische Polyolmischung formuliert werden kann, die über eine Lagerzeit von 24 Tagen keine Veränderung in ihrem Aushärteverhalten zeigt. Im Rahmen der Meßgenauigkeit tritt keine Veränderung der katalytischen Aktivität auf.

| | |
|---|---|
| Polyolmischung: | 100,0 Gew.−Tl. Polyol B |
| | 25,0 Gew.−Tl. 14BD |
| | 6,0 Gew.−Tl. PY |
| | 2,5 Gew.−Tl. $H_{12}$−MDA |
| | 6,0 Gew.−Tl. Zeolith−Paste |
| | 0,2 Gew.−Tl. Kat. 1 |

Die Polyolmischung wird mit 100,0 Tl. Roh−MDI eine Minute unter weitgehendem Ausschluß von Luft und

Luftfeuchtigkeit gemischt. Danach werden ca. 18 g der Mischung in ein zylindrisches Polyethylengefäß gegeben und bei Raumtemperatur sofort mit Hilfe eines "Vibrating – Needle – Curemeter" der Rapra Ltd. ohne weitere Temperierung vermessen.

Die Polyolmischung wird bei Raumtemperatur in Schraubdeckelgläsern gelagert.

Es ergeben sich folgende Aushärtezeiten:

| | |
|---|---|
| nach 2 Tagen Lagerung: | 1. Wert 3 min 5 sec |
| | 2. Wert 3 min 0 sec |
| nach 24 Tagen Lagerung: | 1. Wert 3 min 0 sec |
| | 2. Wert 3 min 3 sec. |

## Patentansprüche

1. Zweikomponenten – Polyurethan – Reaktivmasse, enthaltend eine Isocyanatkomponente a), eine gegen Entmischung stabilisierte, aktiven Wasserstoff enthaltende Komponente b) sowie gegebenenfalls Katalysatoren für die Umsetzung von a) mit b) und gegebenenfalls weiteren Hilfs – und Zusatzstoffen, dadurch gekennzeichnet, daß die aktiven Wasserstoff enthaltende Komponente b) wenigstens eine gegen Entmischung stabilisierende Verbindung gelöst enthält, die ausgewählt ist aus der Gruppe bestehend aus Dicyandiamid, Guanidin, mindestens eine N – H – Bindung aufweisenden Guanidin – Derivaten und Verbindungen, die wenigstens eine N – H – Gruppe oder $NH_2$ – Gruppen und wenigstens eine C – N – Mehrfachbindung oder N – N – Mehrfachbindung aufweisen und in denen das N – Atom der C – N – Gruppe oder ein N – Atom der N – N – Gruppe unmittelbar mit dem N – Atom der N – H – Gruppe oder $NH_2$ – Grupe verbunden ist.

2. Zweikomponenten – Polyurethan – Reaktivmassen nach Anspruch 1, dadurch gekennzeichnet, daß die Komponente b) folgende Bestandteile enthält:
   b1) 100 Gew. – Tl. wenigstens einer hydroxylgruppenhaltigen Verbindung mit einem Molekulargewicht von mindestens 400 und einer Hydroxyfunktionalität von mindestens 2
   b2) 5 – 35 Gew. – Tl. wenigstens eines hydroxylgruppenhaltigen, niedermolekularen Kettenverlängeres mit einem Molekulargewicht von mindestens 62 und einer Funktionalität von mindestens 2
   b3) 0,5 – 10 Gew. – Tl. wenigstens einer gegen die Entmischung von b1) und b2) stabilisierend wirkende gelöste Verbindung der in Anspruch 1 genannten Art,
   b4) 0 – 20 Gew. – Tl. wenigstens eines aliphatischen, aromatischen, oder cycloaliphatischen Diamins oder Triamins mit einem Molekulargewicht von mindestens 60.

3. Verwendung der Zweikomponenten – Polyurethan – Reaktivmasse nach Anspruch 1, 2 oder 3 als Klebstoff.

Europäisches Patentamt

# EUROPÄISCHER RECHERCHENBERICHT

Nummer der Anmeldung
EP 92 11 9146

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | EP-A-0 160 813 (BAYER)<br>* Ansprüche 1-3,6-10 *<br>* Seite 3, Zeile 20 - Zeile 29 *<br>* Seite 12, Zeile 10 - Zeile 25 *<br>--- | 1,2 | C08G18/65<br>C08K5/16<br>C08K5/31<br>C09J175/04 |
| X | EP-A-0 307 987 (RECTICEL)<br>* Ansprüche 1,5,14,15 *<br>* Seite 4, Zeile 15 - Zeile 22 *<br>* Seite 4, Zeile 55 - Seite 6, Zeile 23 *<br>--- | 1 | |
| X | DATABASE WPIL<br>Week 8451,<br>Derwent Publications Ltd., London, GB;<br>AN 84-315379<br>& JP-A-59 197 416 (DAIICHI) 9. November 1984<br>* Zusammenfassung *<br>--- | 1 | |
| X | DATABASE WPIL<br>Week 9126,<br>Derwent Publications Ltd., London, GB;<br>AN 91-188945<br>& JP-A-3 115 421 (ASAHI GLASS) 16. Mai 1991<br>* Zusammenfassung *<br>--- | 1 | RECHERCHIERTE SACHGEBIETE (Int. Cl.5 )<br>C08G<br>C08K |
| A | US-A-4 485 032 (F. OLSTOWSKI ET AL.)<br>* Ansprüche 1,2,6 *<br>* Spalte 3, Zeile 1-36 *<br>--- | 1 | |
| A | GB-A-985 588 (GOODYEAR)<br>* Ansprüche 1-6 *<br>----- | 1 | |

Der vorliegende Recherchenbericht wurde für alle Patentansprüche erstellt

| Recherchenort | Abschlußdatum der Recherche | Prüfer |
|---|---|---|
| DEN HAAG | 01 MAERZ 1993 | VAN PUYMBROECK M. A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)